(19) Europäisches Patentamt / European Patent Office / Office européen des brevets

(11) **EP 2 373 040 A2**

(12) **EUROPEAN PATENT APPLICATION**

(43) Date of publication:
**05.10.2011 Bulletin 2011/40**

(51) Int Cl.:
***H04N 9/31*** *(2006.01)*

(21) Application number: **11160093.8**

(22) Date of filing: **28.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.04.2010 KR 20100030039**

(71) Applicant: **Samsung Electronics Co., Ltd.**
**Suwon-si, Gyeonggi-do 442-742 (KR)**

(72) Inventors:
• **Park, Ki-hong**
  **Gyeonggi-do (KR)**
• **Kim, Myung-jae**
  **Gyeonggi-do (KR)**
• **KIM, Seung-min**
  **Seoul (KR)**

(74) Representative: **Fearnside, Andrew Simon**
**Appleyard Lees**
**15 Clare Road**
**Halifax, HX1 2HY (GB)**

(54) **Image distortion correction apparatus and method**

(57)     An image distortion correction apparatus (200) and method are provided. The image distortion apparatus includes an image projector (130) which projects an image on a projection screen; a user interface (140) which receives an adjustment signal allowing a keystone correction on the projected image; a keystone correction unit (150) which corrects a keystone distortion of the projected image by moving each side of the projected image according to the adjustment signal; and a controller (160) which controls the image projector and the keystone correction unit to correct the image.

# FIG. 2

200

160

| | | |
|---|---|---|
| IMAGE INPUT UNIT (110) | CONTROLLER | IMAGE PROJECTOR (130) |
| SIGNAL PROCESSOR (120) | | USER INTERFACE (140) |
| KEYSTONE CORRECTION UNIT (150) | | |

EP 2 373 040 A2

## Description

## CROSS-REFERENCE TO RELATED APPLICATIONS

This application claims priority from Korean Patent Application No. 10-2010-0030039, filed on April 1, 2010, in the Korean Intellectual Property Office, the disclosure of which is incorporated herein by reference in its entirety.

## BACKGROUND

1. Field of the Invention

Apparatuses and methods consistent with the present disclosure relate to correcting an image distortion, and more particularly, to an image distortion correction apparatus and method which perform a keystone correction by adjusting each side of a projected image.

2. Description of the Related Art

With advances in information technology (IT), a projection-type image display apparatus using a liquid crystal display (LCD) element has been developed as a device to view an image on a big screen.

In general, such a projection-type image display apparatus includes a screen and a projector which generates, magnifies, and projects an image on the screen.

When an image is displayed on a projection screen using a projector, a keystone distortion may occur on the displayed image due to the relative position between the projector and the screen. To remove the keystone distortion, a keystone correction is used.

In a keystone correction according to the related art, an image is corrected by moving a plurality of points (for example, four vertices of a trapezoid) which constitute a projected image and then designating a position of each point.

However, if the plurality of points are moved one by one for the keystone correction, it is difficult to parallelize and horizontalize the points.

Consequently, the plurality of points of the image need to be moved many times to strike a balance vertically and horizontally.

SUMMARY

Exemplary embodiments address at least the above problems and/or disadvantages and other disadvantages not described above. Also, an exemplary embodiment is not required to overcome the disadvantages described above, and an exemplary embodiment of the present invention may not overcome any of the problems described above. According to the present invention there is provided an apparatus and method as set forth in the appended claims. Other features of the invention will be apparent from the dependent claims, and the description which follows.

Exemplary embodiments provide an image distortion correction apparatus and method which perform a keystone correction on an image projected by a projector.

According to an aspect of an exemplary embodiment, there is provided an image distortion correction method, including projecting an image on a projection screen; receiving an adjustment signal which allows a keystone correction on the projected image; correcting a keystone distortion of the projected image by moving each side of the projected image according to the adjustment signal to coincide with a desired portion of a screen; and generating a corrected original image by moving each side of an original image to correspond to each side of the corrected projected image

The image distortion correction method may further include setting up a plurality of equations corresponding to positions of each side of the corrected original image; and calculating coordinates of each vertex of the corrected original image using the plurality of equations.

The projecting may include displaying a central axis on each side of the projected image on the projection screen; and the correcting may include matching the central axis of each side with a corresponding side of the desired portion of the screen by moving each side of the projected image in parallel according to the adjustment signal so that each side of the projected image coincides with the desired portion of the screen.

The correcting may include rotating each side of the projected image which is moved in parallel according to the adjustment signal clockwise or counterclockwise with respect to the central axis so that each side of the projected image accords to the desired screen parallelly or horizontally.

The adjustment signal may be received from a remote controller which receives a user command to perform a parallel movement or a rotation of each side of the projected image, and the parallel movement or the rotation may be performed according to at least one of a number of manipulations, a manipulated time period, and a manipulated distance on the remote controller.

The adjustment signal may be received from a remote controller which receives a user command to perform a parallel movement or a rotation of each side of the projected image, and the parallel movement or the rotation may be performed according to a movement distance or a rotation angle of the remote controller or a touch on a touch panel provided on the remote controller.

The image distortion correction method may further include displaying a pointer which indicates a side selected according to the adjustment signal; and moving and displaying the point according to the parallel movement or the rotation of each side.

According to an aspect of an another exemplary, there is provided an image distortion correction apparatus, including an image projector which projects an image on a projection screen; a user interface which receives an adjustment signal allowing a keystone correction on the projected image; a keystone correction unit which corrects a keystone distortion of the projected image by moving each side of the projected image according to the adjustment signal to coincide with a desired screen, and generates a corrected original image by moving each side of an original image to correspond to each side of the corrected projected image; and a controller which provides the image projector with the corrected original image.

The keystone correction unit may set up a plurality of equations corresponding to positions of each side of the corrected original image, and calculate coordinates of each vertex of the corrected original image using the plurality of equations.

The controller may control the image projector to display a central axis on each side of the projected image on the projection screen, and control the keystone correction unit to match the central axis of each side with a corresponding side of the desired screen by moving each side of the projected image in parallel according to the adjustment signal so that each side of the projected image accords to the desired screen.

The controller may control the keystone correction unit to rotate each side which is moved in parallel according to the adjustment signal clockwise or counterclockwise with respect to the central axis so that each side of the projected image accords to the desired screen parallelly or horizontally.

The adjustment signal may be received from a remote controller which receives a user command to perform a parallel movement or a rotation of each side of the projected image, and the parallel movement or the rotation may be performed according to at least one of a number of manipulations, a manipulated time period, and a manipulated distance on the remote controller.

The adjustment signal may be received from a remote controller which receives a user command to perform a parallel movement or a rotation of each side of the projected image, and the parallel movement or the rotation may be performed according to a movement distance or a rotation angle of the remote controller or a touch on a touch panel provided on the remote controller.

The adjustment signal may be received from a remote controller which receives a user command to perform a parallel movement or a rotation of each side of the projected image, and the parallel movement or the rotation may be performed according to a touch on a touch panel provided on the remote controller.

The controller may control the image projector to display a pointer which indicates a side selected according to the adjustment signal, and move and display the point according to the parallel movement or the rotation of each side.

BRIEF DESCRIPTION OF THE DRAWINGS

The above and/or other aspects will be more apparent by describing certain exemplary embodiments with reference to the accompanying drawings, in which:

FIG. 1A is a schematic view illustrating an image system according to an exemplary embodiment;
FIG. 1B is a view illustrating manipulation buttons provided on a remote controller according to an exemplary embodiment;
FIG. 2 is a block diagram illustrating an image distortion correction apparatus according to an exemplary embodiment;
FIGS. 3A to 6C are views illustrating a keystone correction method according to an exemplary embodiment;
FIGS. 7A and 7B are views illustrating a method for calculating coordinates of each vertex of a corrected original image according to an exemplary embodiment;
FIG. 8A to 8C are views illustrating a keystone correction method according to various exemplary embodiments; and
FIG. 9 is a flowchart illustrating an image distortion correction method according to an exemplary embodiment.

DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the invention with unnecessary detail.

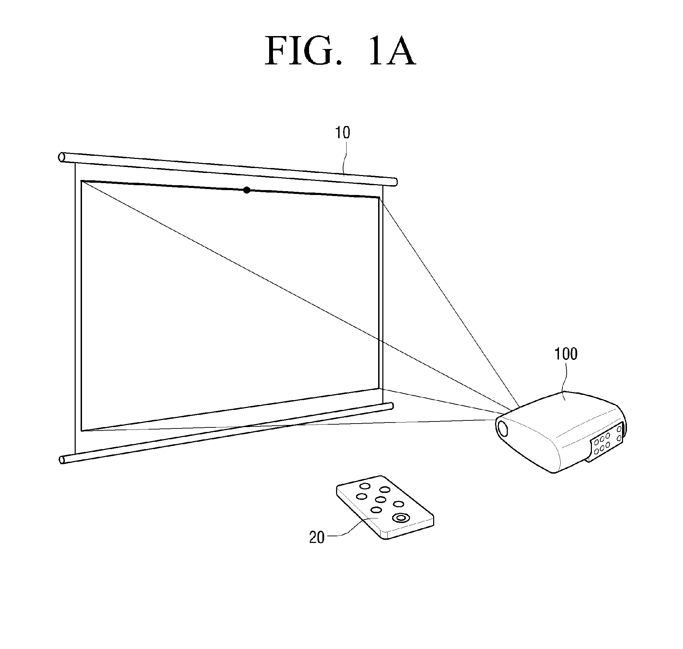

FIG. 1A is a schematic view illustrating an image system according to an exemplary embodiment.

Referring to FIG. 1A, the image system includes an image projection apparatus 100, a display apparatus 10, and a remote controller 20.

An image system, which includes a display apparatus and an image projector projecting an image on the display apparatus, may be implemented with various forms. For example, the image system may be implemented as a screen device or a mobile communication terminal.

The image projection apparatus 100 may display an image on a projection screen of the display apparatus 10 by projecting light beams onto the projection screen.

The display apparatus 10 displays an image signal which is projected by the image projection apparatus 100. The display apparatus 10 may be implemented using various types of display panels such as an LCD, a digital light processing (DLP) display, a liquid crystal on silicon (LCOS) display, and so on.

A projected image which the image projection apparatus 100 projects onto the display apparatus 10 may be displayed with distortion. For example, the projected image may be displayed in a deformed rectangular shape. Therefore, a keystone correction is required to square the projected image.

The remote controller 20 may receive a user command to perform a keystone correction on a projected image.

The remote controller 20 may include manipulation buttons which are used to move or rotate each side of a projected image in order to perform a keystone correction on the projected image. Alternatively, the remote controller 20 may be implemented as a pointing device which allows a user to select a specific portion.

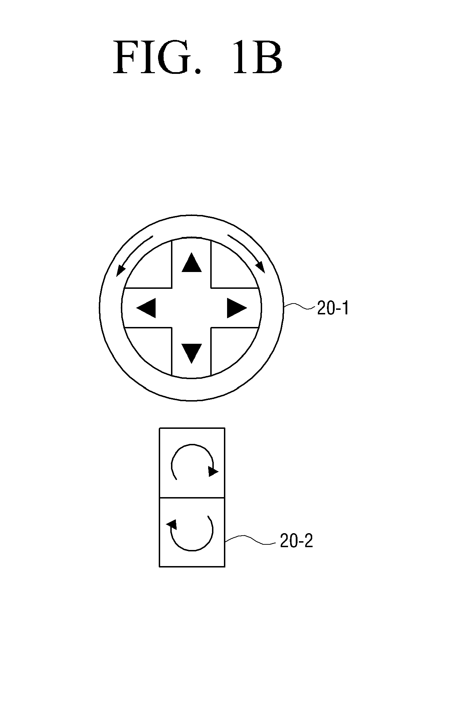

FIG. 1B is a view illustrating manipulation buttons provided on a remote controller according to an exemplary embodiment.

Referring to FIG. 1B, the remote controller 20 of FIG. 1A includes direction buttons 20-1. The direction button 20-1 has a function of moving each side of a projected image upward, downward, leftward, and rightward and the function of rotating each side of a projected image clockwise and counterclockwise.

Herein, the moving function may be realized by pressing the buttons (for example, ▼). If the direction button is pressed once, a projected image may be moved as much as a predetermined distance. Alternatively, the projected image may be moved as long as a time period during which the direction button is pressed. Other functions of the button may be set in various ways by those skilled in the art within a reasonable range.

The rotating function may be realized in a manner analogous to the moving function. That is, if a rotation button is pressed once, a projected image may be rotated at a predetermined angle, or at an angle proportional to a time period during which the rotation button is pressed. Alternatively, the projected image may be rotated by moving the remote controller to the left or right while pressing the rotation button.

A rotation button 20-2 which is used to rotate each side of a projected image clockwise or counterclockwise may be provided separately from the direction button 20-1.

The rotation button 20-2 may be set so that if the rotation button 20-2 is pressed once, a projected image is rotated at a predetermined angle or at an angle proportional to a time period during which the rotation button 20-2 is pressed.

The remote controller 20 may be implemented to allow a projected image to be adjusted according to a parallel movement or a rotation degree of the remote controller 20 itself. For example, if a user moves the remote controller 20 in parallel while pointing at one side of the projected image, the side of the projected image may be moved according to the movement. In this case, a specific button may be pressed on the remote controller 20 while the remote controller 20 is moved in parallel or rotated so that the display apparatus 10 can recognize the signal of the remote controller 20 is to have the projected image moved or rotated. Alternatively, the remote controller 20 may be implemented as a pointing device which allows a user to point at a specific portion.

The remote controller 20 may be implemented in a form of a touch panel or a touch screen.

For example, a projected image may be adjusted to correspond to the movement or rotation on a touch panel. In particular, a side of a projected image may be moved or rotated corresponding to touch-and-drag or drag-and-drop on the touch panel. As occasion demands, lines which guide user's touch may be displayed on the touch panel so that a user may move or rotate sides of a projected image by touching the lines. It is also possible to mark a touched portion on the touch panel using a pointer or a cursor.

The same image as an image projected to the display apparatus 10 may be displayed on a touch panel, and thus a user may move each side of the image projected to the display apparatus 10 by adjusting the image displayed on the touch panel.

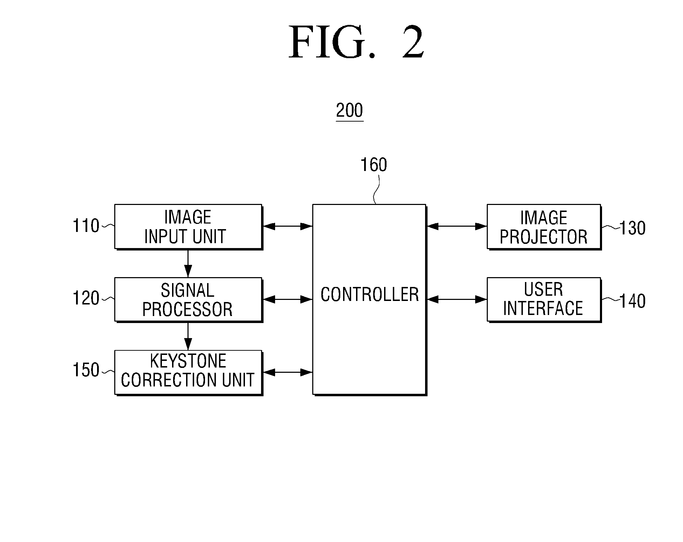

FIG. 2 is a block diagram illustrating an image distortion correction apparatus according to an exemplary embodiment.

Referring to FIG. 2, the image distortion correction apparatus 200 includes an image input unit 110, a signal processor 120, an image projector 130, a user interface 140, a keystone correction unit 150, and a controller 160.

The image distortion correction apparatus 200 may be implemented as the image projection apparatus 100 of FIG. 1A.

The image input unit 110 receives an image signal to be projected to the display apparatus 10 (shown in FIG. 1A). The image signal may be input from an external apparatus such as a personal computer (PC) or a tuner.

The signal processor 120 may include a scaling unit (not shown) and a display driving unit (not shown). The scaling unit changes the image size and the image definition by processing an image signal input from the input unit 110. The display driving unit converts the image signal changed by the scaling unit to be in various formats according to the type of a display panel.

The image projector 130 projects an image signal which is processed by the signal processor 120 or an image signal of which distortion is corrected by the keystone correction unit 150 onto the display apparatus (not shown).

The image projector 130 may cause the central axis to be displayed at the center of each side of a projected image displayed on a projection screen.

The image projector 130 may include an optical source, a light-permeable display unit, a projection lens, and so on.

The user interface 140 receives an adjustment signal which allows a keystone correction to performed on an image projected to the display apparatus 10. Herein, the adjustment signal may be a signal which is received from the remote controller 20 (shown in FIG. 1A).

The adjustment signal may include a movement signal which allows each side of a projected image to move upward, downward, leftward, or rightward, and a rotation signal which allows each side of the projected image to rotate clockwise or counterclockwise with respect to a central axis.

The keystone correction unit 150 may perform a keystone correction by adjusting the position of each side of a projected image according to an adjustment signal. The projected image may be a test image.

Specifically, the keystone correction unit 150 may perform a keystone correction on the projected image by moving the position of each side of the projected image to coincide with a desired screen according to an adjustment signal. Herein, the desired screen refers to an area within which a user desires to display the projected image.

The keystone correction unit 150 may generate a corrected original image by moving each side of an original image to coincide with each side of the corrected projected image.

The keystone correction unit 150 may set up a plurality of equations regarding each side of the corrected original image, and calculates coordinates of each vertex of the corrected original image using the plurality of equations.

The keystone correction unit 150 may move each side in parallel according to the adjustment signal so that central axes of each side of the projected image coincide with a corresponding side of a desired screen. Thus, each side of the projected image fits the desired screen.

The keystone correction unit 150 may rotate each side of the projected image clockwise or counterclockwise with respect to a central axis. By doing so, each side of the projected image may coincide with the desired screen horizontally and vertically.

The keystone correction unit 150 may set up a plurality of equations regarding each side of the moved projected image using the parallel movement and rotation of each side.

The keystone correction unit 150 may set up simultaneous equations regarding two sides crossing each other and resolve the equations to obtain coordinates of each vertex of the corrected original image.

The controller 160 may control overall operations of the above elements.

The controller 160 may determine the condition of the projected image and control the image projector 130 and the keystone correction unit 150 to provide the corrected original image signal to the image projector 150.

The controller 160 may control the image projector 130 to display a shape of a desired screen which indicates an area within which the projected image is displayed on a projection screen.

The controller 160 may control the image projector 130 to display central axes on each side of the projected image which is displayed on a projection screen.

The image distortion correction apparatus 200 may further include a zoom lens and a photographing unit. The zoom lens adjusts the size of the projected image on the projection screen, and the photographing unit corrects an image signal projected to the projection screen.

The image distortion correction apparatus 200 having the zoom lens and the photographing unit may display a test pattern on the projection screen, photograph an image using a monitor camera, zoom in or out to display the photographed image on the projection screen with the maximum size, and perform the keystone correction.

The zoom in or out may be performed by displaying a test pattern on the projection screen and then determining whether or not the test pattern is within the projection screen with the maximum size.

Each side of a projected image is moved in parallel to or rotated with respect to a central axis in this exemplary embodiment, but this is merely exemplary. Alternatively, it may be implemented that each side of the projected image is moved in parallel to or rotated with respect to a desired axis selected by a user.

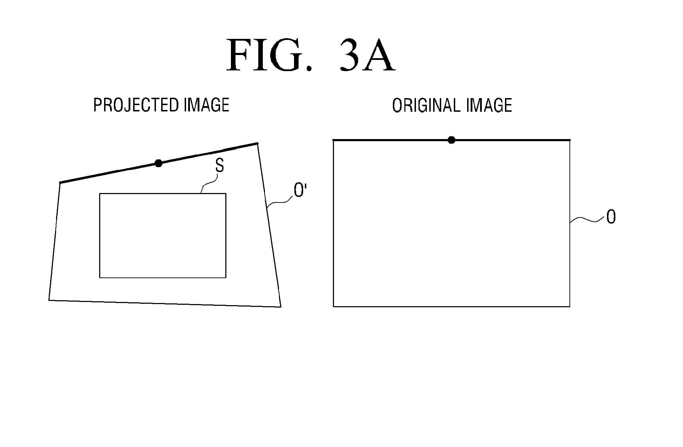

FIGS. 3A to 6C are views illustrating a keystone correction method according to an exemplary embodiment.

FIGS. 3A to 3C show a method for correcting a top side of a projected image.

Referring to FIG. 3A, an original image O is projected in a trapezoidal shape. Then, a user desires to correct a projected image O' having the trapezoidal shape to be in a shape of a screen S.

In this situation, the desired screen S may be displayed on the projection screen and a central axis may be displayed on the top side of the projected image O' as shown in FIG. 3A.

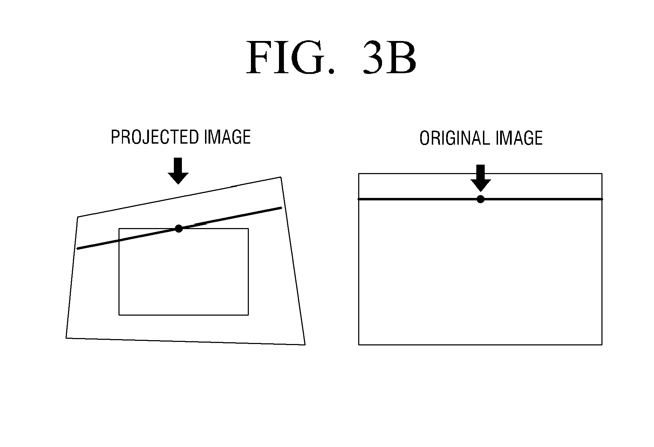

As shown in FIG. 3B, the top side of the projected image O' may be moved downward in parallel so that the central axis displayed on the top side of the projected image O' coincides with the top side of the screen S. This operation may be performed by manipulating the direction button V 20-1 (shown in FIG. 1B) provided on the remote controller 20 (shown in FIG. 1A). For example, the direction button V 20-1 may be pressed a predetermined number of times or for a predetermined time period to perform the operation.

The top side of the original image O may also be moved downward as much as the top side of the projected image O' moves.

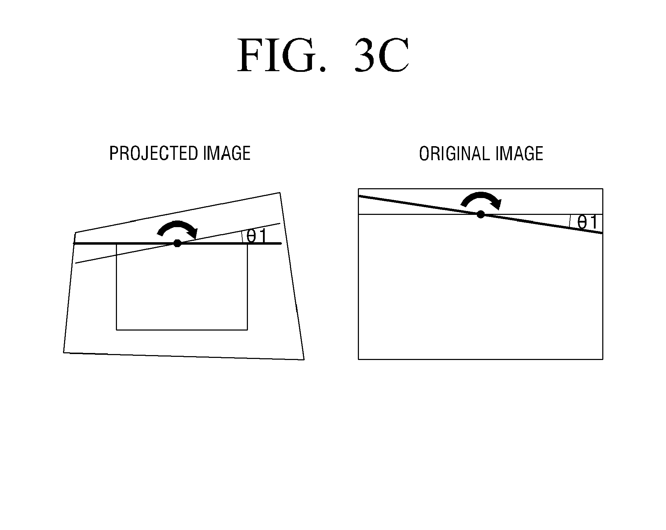

As shown in FIG. 3C, the top side of the projected image O' may be rotated at an angle θ1 clockwise with respect to the central axis so that the top side of the projected image O' accords to the top side of the screen S. This operation may be performed by manipulating the direction button 20-1, 20-2 (shown in FIG. 1B) provided on the remote controller 20 (shown in FIG. 1A). For example, if the clockwise direction button is pressed a predetermined number of times or for a predetermined time period, a side of the projected image O' may be moved as much as a predetermined distance. This is because rotating the top side of the projected image O' clockwise is easy to coincide with the top side of the screen S. Therefore, the side of the projected image O' may be rotated clockwise or counterclockwise depending on user's convenience.

Correspondingly, the top side of the original image O may also be rotated clockwise at the angle θ1, as much as the top side of the projected image O' is rotated.

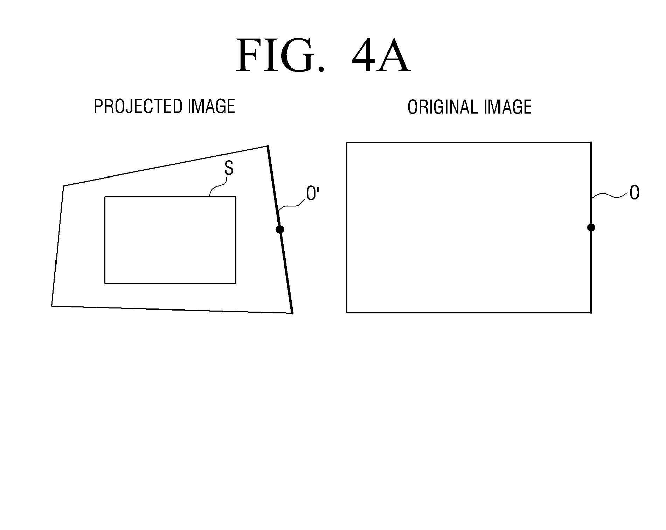

FIGS. 4A to 4C show a method for correcting a right side of a projected image.

As shown in FIG. 4A, a central axis may be displayed on the right side of the projected image O'.

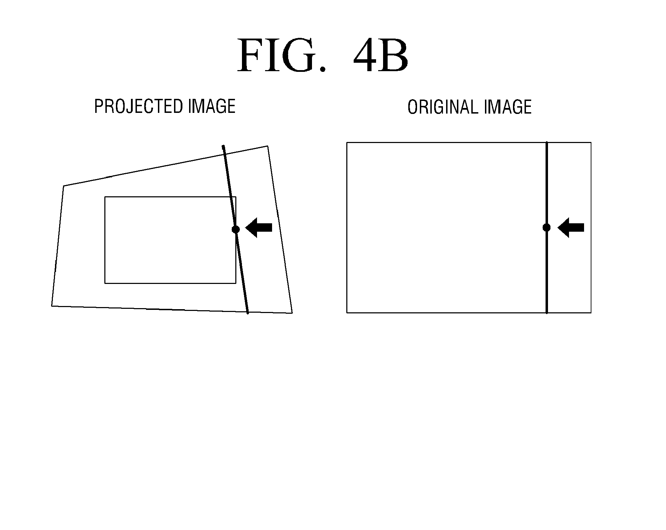

Referring to FIG. 4B, the right side of the projected image O' may be moved leftward in parallel so that the central axis on the right side of the projected image O' coincides with the right side of the screen S. This operation may be performed by manipulating the direction button ◄ 20-1 (shown in FIG. 1B) provided on the remote controller 20 (shown in FIG. 1A). For example, the direction button ◄ 20-1 may be pressed a predetermined number of times or for a predetermined time period to perform the operation.

Correspondingly, the right side of the original image O may also be moved leftward as much as the right side of the projected image O' moves.

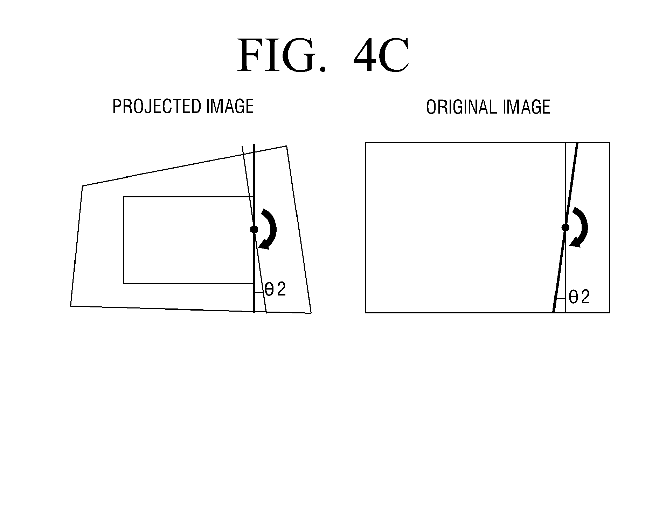

As shown in FIG. 4C, the right side of the projected image O' may be rotated at an angle θ2 clockwise with respect to the central axis to coincide with the right side of the screen S. The operation may be performed by manipulating the direction button 20-1 (shown in FIG. 1B) provided on the remote controller 20 (shown in FIG. 1A). For example, the direction button 20-1 may be pressed a predetermined number of times or during a predetermined time period to perform the operation.

Correspondingly, the right side of the original image O may also be rotated clockwise at the angle θ2 in the same manner as right top side of the projected image O'.

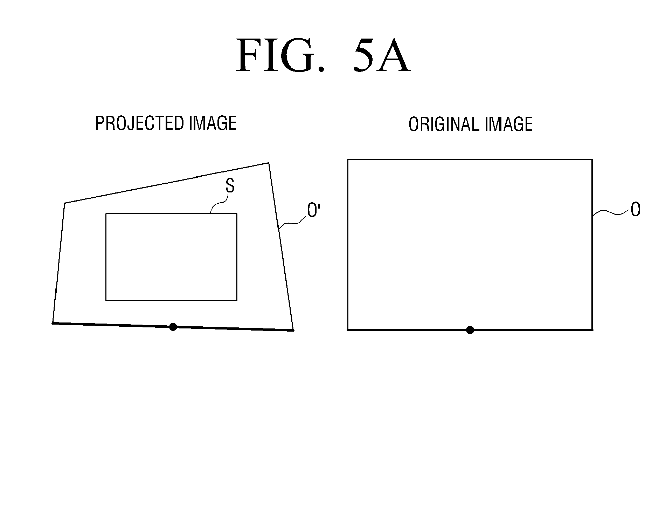

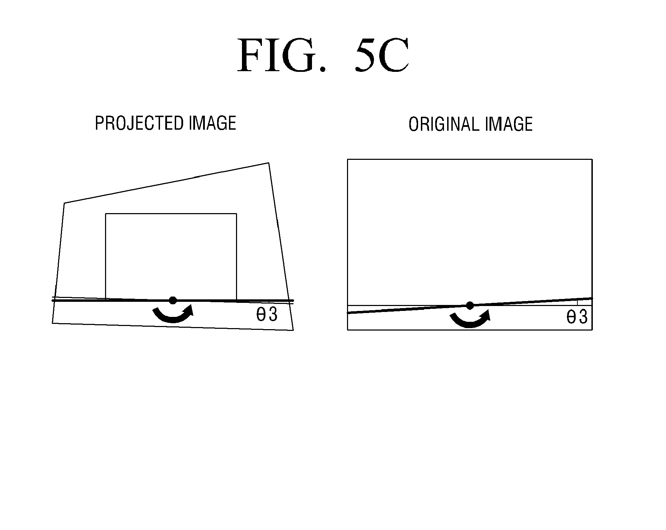

FIGS. 5A to 5C show a method for correcting a bottom side of a projected image.

The method for correcting the bottom side of the projected image in FIGS. 5A to 5C is analogous to the method for correcting the top side of the projected image in FIGS. 3A to 3C, and thus detailed description will be omitted.

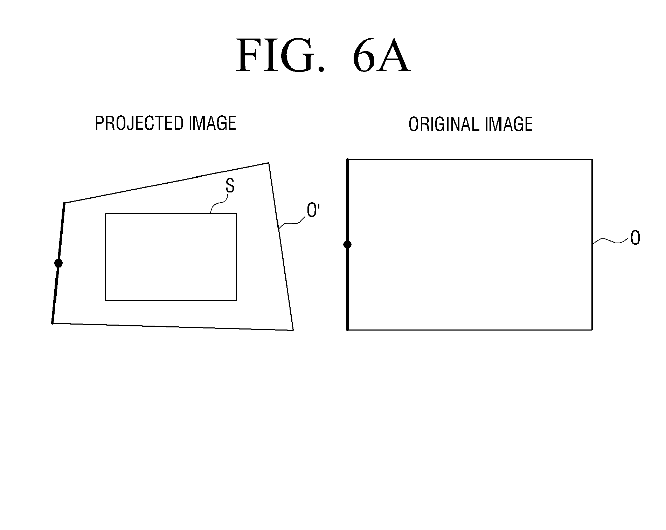

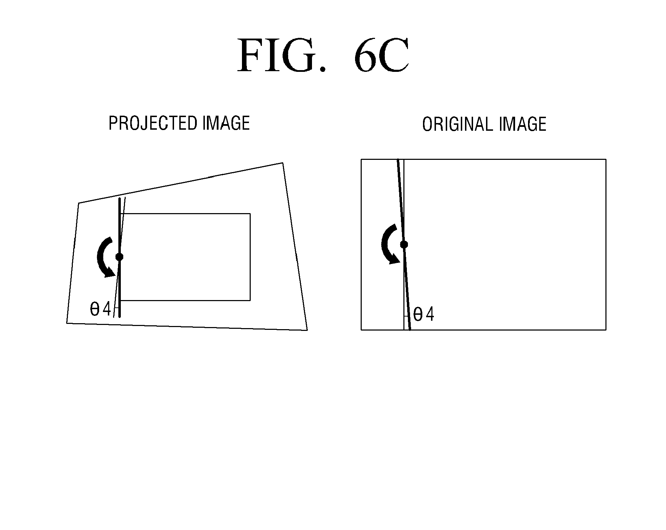

FIGS. 6A to 6C show a method for correcting a left side of a projected image.

The method for correcting the left side of the projected image in FIGS. 6A to 6C is analogous to the method for correcting the right side of the projected image in FIGS. 4A to 4C, and thus detailed description will be omitted.

In FIGS. 3A to 6C, a central axis is displayed on the side on which a keystone correction will be performed, but this is merely an exemplary embodiment for convenience of description. The central axes may be displayed on all of the sides of the projected image, or may also be displayed only when a predetermined operation is performed.

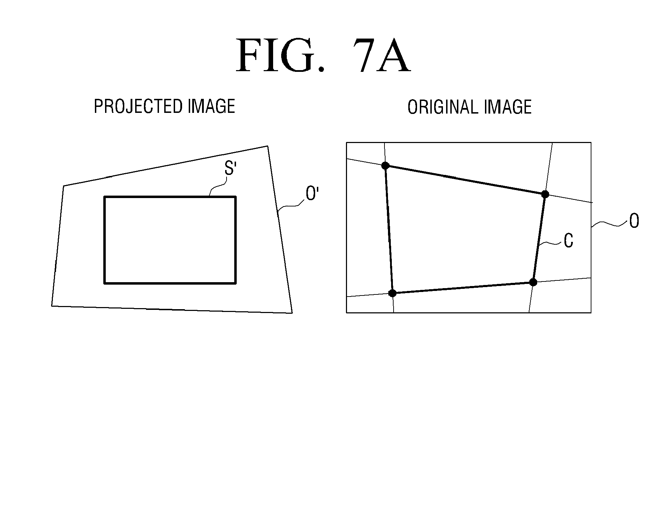

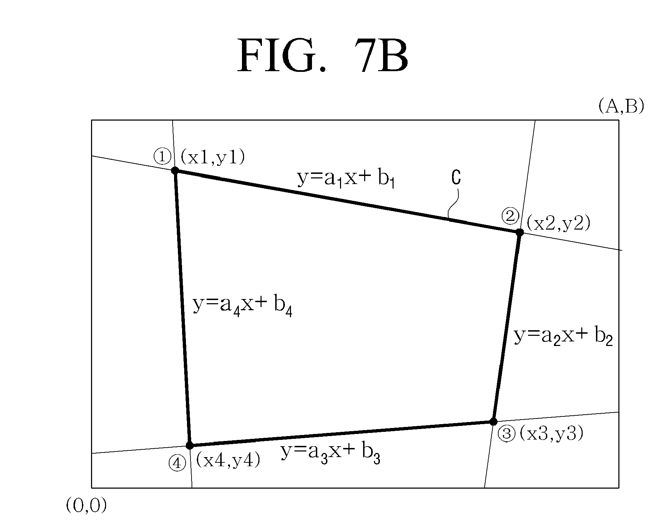

FIGS. 7A and 7B are views illustrating a method for calculating coordinates of each vertex of a corrected original image according to an exemplary embodiment.

FIG. 7A shows a screen projection image S which is obtained by correcting each side of a projected image according to the methods illustrated in FIGS. 3A to 6C and a finally corrected original image C which is corrected to correspond to the screen projection image S.

As shown in FIG. 7A, an original image O needs to be corrected to have the shape indicated by reference C in order to correct a projected image O' having a keystone distortion to be in the shape of the desired screen S.

As shown in FIG. 7B, equations and vertexes of each side of the finally corrected original image C may be set up and calculated.

Hereinbelow, a method for setting up an equation for each side of the finally corrected original image C and calculating each vertex will be explained in detail.

The method for correcting the top side of the projected image illustrated in FIGS. 3A to 3C and the method for setting up an equation for the top side of the corrected original image based on the finally corrected original image C will be explained.

If it is supposed that the top side of the projected image O' moves downward as much as 'b' in FIG. 3B, the top side of the projected image O' rotates clockwise at the angle θ1 with respect to the central axis (x=A/2), and the original image O is also rotated in the same manner. Therefore, the equation regarding the top side of the corrected original image C may be expressed as follows:

Equation 1:

$$y = -\tan\theta 1(x - A/2) + (B - b)$$

$$y = -\tan\theta 1 x + \{\tan\theta 1 A/2 + (B - b)\}$$

If the top side of the projected image O' rotates counterclockwise at the angle θ1, the equation regarding the top side of the corrected original image C may be expressed as follows:

Equation 2:

$$y = \tan\theta 1(x - A/2) + (B - b)$$

$$y = \tan\theta 1 x - \{\tan\theta 1 A/2 - (B - b)\}$$

The method for correcting the right side of the projected image illustrated in FIGS. 4A to 4C and the method for setting up an equation for the right side of the corrected original image based on the finally corrected original image C will be explained.

If the right side of the projected image O' moves leftward as much as 'a' in FIG. 4B, the right side of the projected image O' rotates clockwise at the angle θ2 with respect to the central axis (y=B/2), and the original image O is also rotated at the same manner. Therefore, the equation regarding the right side of the corrected original image C may be expressed as follows:

Equation 3:

$$y = \cot\theta 2(x - (A - a)) + B/2$$

$$y = \cot\theta 2 x - \{\cot\theta 2(A - a) - B/2\}$$

If the right side of the projected image O' rotates counterclockwise at the angle θ2, the equation regarding the right side of the corrected original image C may be expressed as follows:

Equation 4:

$$y = -\cot\theta 2(x - (A - a)) + B/2$$

$$y = -\cot\theta 2 x + \{\cot\theta 2(A - a) - B/2\}$$

The method for correcting the bottom side of the projected image illustrated in FIGS. 5A to 5C and the method for setting up an equation regarding the bottom side of the corrected original image based on the finally corrected original image C will be explained.

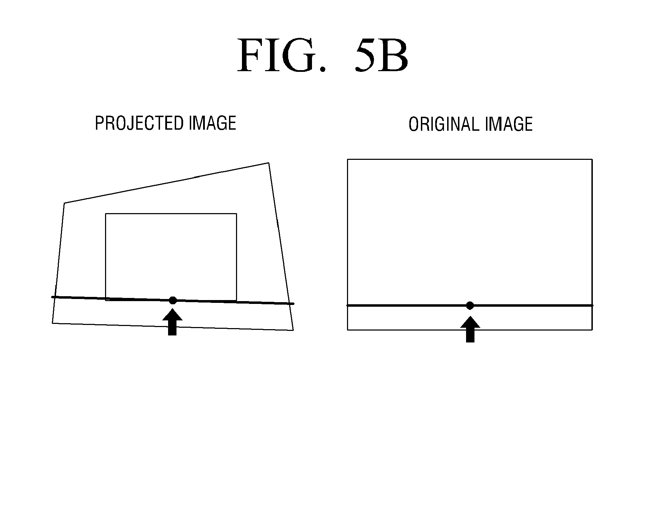

If it is supposed that the bottom side of the projected image O' moves upward as much as 'c' in FIG. 5B, the bottom side of the projected image O' rotates clockwise at the angle θ3 with respect to the central axis (x=A/2), and the original image O is also rotated at the same manner. Therefore, the equation regarding the bottom side of the corrected original image may be expressed as follows:

Equation 5:

$$y = -\tan\theta 3(x - A/2) + c$$

If the bottom side of the projected image O' rotates counterclockwise at the angle θ3, the equation regarding the bottom side of the corrected original image C may be expressed as follows:

Equation 6:

$$y = \tan\theta 3(x - A/2) + c$$

$$y = \tan\theta 3 x - \{\tan\theta 3 A/2 - c\}$$

The method for correcting the left side of the projected image illustrated in FIGS. 6A to 6C and the method for setting up an equation regarding the left side of the corrected original image C based on the finally corrected original image C will be explained.

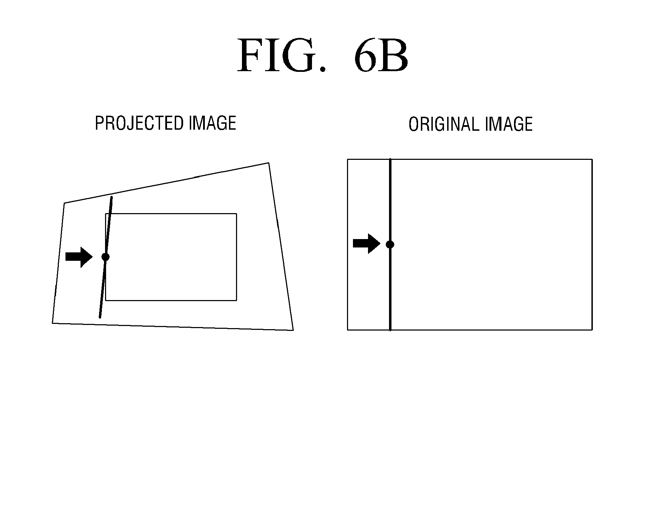

If it is supposed that the left side of the projected image O' moves rightward as much as 'd' in FIG. 6B, the left side of the projected image O' rotates clockwise at the angle θ4 with respect to the central axis (y=2/B), and the original image C is also rotated at the same manner. Therefore, the equation regarding the right side of the corrected original image C may be expressed as follows:

Equation 7:

$$y = \cot\theta 4(x - d) + B/2$$

$$y = \cot\theta 4 x - \{\cot\theta 4 d - B/2\}$$

If the left side of the projected image O' rotates counterclockwise at the angle θ4, the equation regarding the left side of the corrected original image C may be expressed as follows:

Equation 8:

$$y = -\cot\theta 4(x - d) + B/2$$

$$y = -\cot\theta x + \cot\theta 4 d + B/2$$

Hereinbelow, the method for calculating each vertex of the corrected original image based on the above equations will be explained.

Equation 1 or 2 regarding the top side of the corrected original image is supposed to be $y = a_1 x + b_1$, and Equation 3 or 4 regarding the right side of the corrected original image is supposed to be $y = a_2 x + b_2$.

Equation 5 or 6 regarding the bottom side of the corrected original image is supposed to be $y = a_3 x + b_3$, and Equation 7 or 8 regarding the left side of the corrected original image is supposed to be $y = a_4 x + b_4$.

In this case, the coordinate of the vertex where the top side and the right side meet may be obtained by solving the simultaneous equations of $y = a_1x + b_1$ and $y = a_2x + b_2$, and the coordinate of the vertex where the right side and the bottom side meet may be obtained by solving the simultaneous equations of $y = a_2x + b_2$ and $y = a_3x + b_3$.

In addition, the coordinate of the vertex where the bottom side and the left side meet may be obtained by solving the simultaneous equations of $y = a_3x + b_3$ and $y = a_4x + b_4$, and the coordinate of the vertex where the left side and the top side meet may be obtained by solving the simultaneous equations of $y = a_4x + b_4$ and $y = a_1x + b_1$.

A method for solving simultaneous equations is apparent to those skilled in the art, and thus detailed description will be omitted.

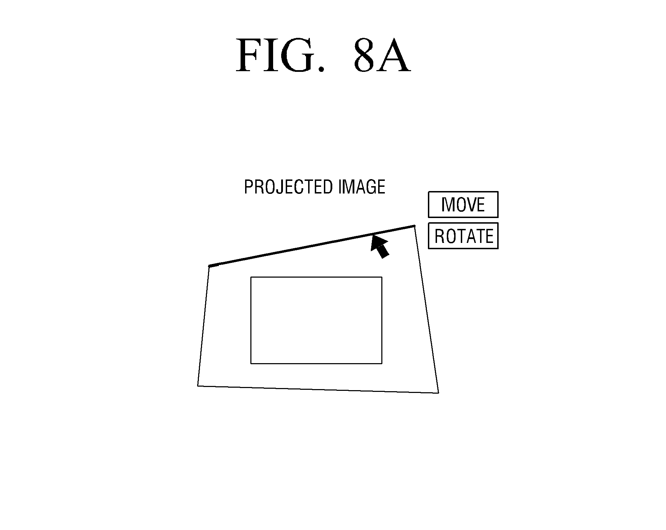

FIG. 8A to 8C are views illustrating a keystone correction method according to various exemplary embodiments.

Referring to FIG. 8A, if a user designates a side to be corrected on a projected image using a remote controller, a pointer (or a cursor) indicating the selected side may be displayed. If the side is selected, a menu which allows the rotation or the movement may be displayed on the projection screen, and a user may select the rotation of the selected side, the order of moving sides, whether or not to move, and so on.

Alternatively, the order of correcting each side of the projected image, the order of moving the side, or the order of rotating the side may be preset, and the operations may be performed according to the preset order without the selection by a user.

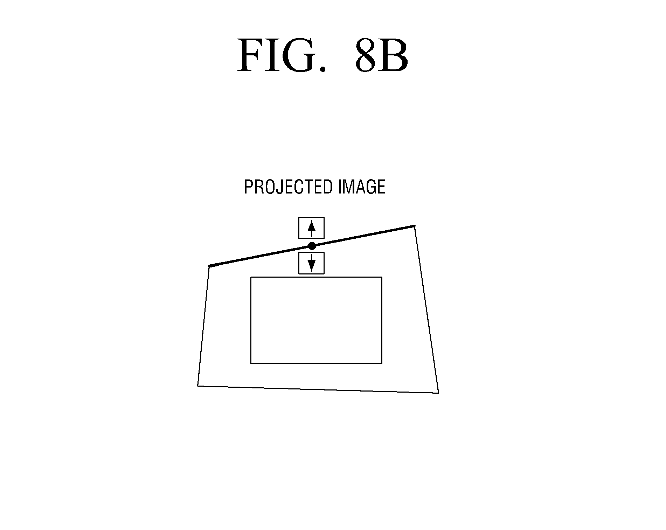

In FIG. 8B, if a side to be moved is selected, buttons which allow the side to move in parallel may be displayed on the projection screen. A user may move the side in parallel by selecting the buttons on the projection screen using the buttons of the remote controller or a pointing device. For example, it may be set that if the button displayed on the projection screen is selected once, the side moves in parallel as much as a predetermined distance. Then, the user may move the side as much as a desired distance by manipulating the button a corresponding number of times.

The buttons which allow a side to rotate may be displayed on the projection screen, and a user may rotate the side by selecting the buttons on the projection screen using the buttons of the remote controller or the pointing device.

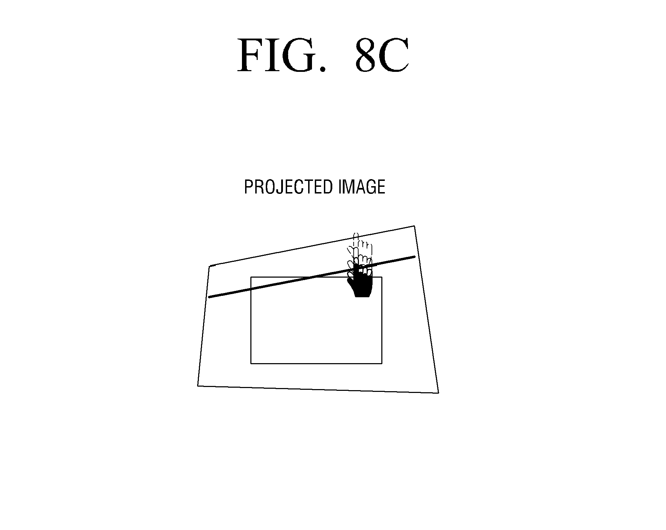

Referring to FIG. 8C, a side may be moved to a desired position by dragging a pointer which indicates the selected side on the desired position. In this situation, dragging the pointer may be performed by the movement of the buttons of the remote controller or the remote controller itself (or the pointing device).

The parallel movement is described in the above exemplary embodiments, but it is apparent to those skilled in the art that the rotation of the side is also applicable to the exemplary embodiments. Therefore, detailed description thereof will be omitted

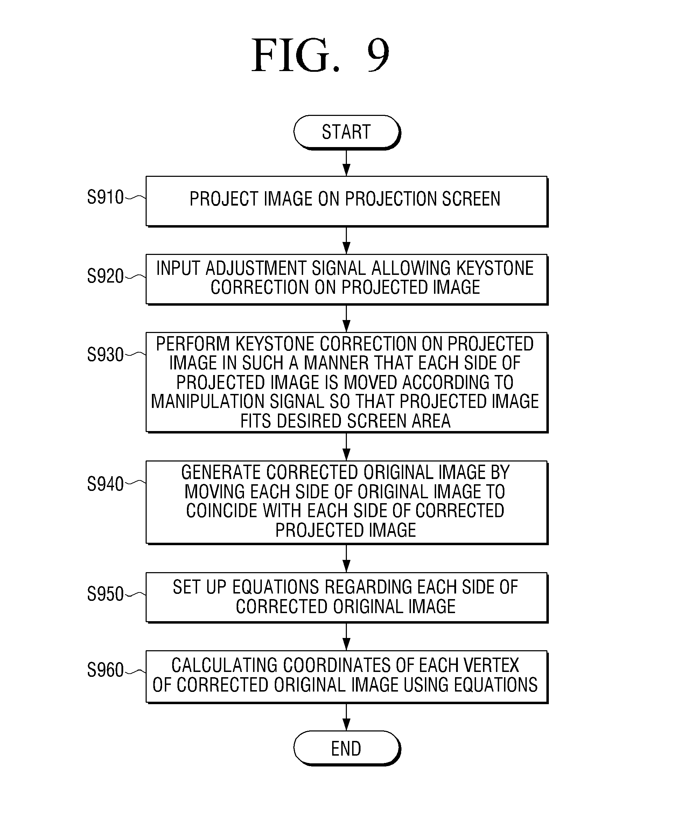

FIG. 9 is a flowchart illustrating an image distortion correction method according to an exemplary embodiment.

According to the image distortion correction method illustrated in FIG. 9, a projector projects an image on a projection screen (S91 0). In a case where the projected image is distorted in a trapezoidal shape, a keystone correction may be needed.

An adjustment signal which allows the keystone correction on the projected image is received (S920). For example, the adjustment signal may be a remote control signal which is input through a user interface device such as a remote controller. Specifically, the adjustment signal may be a remote control signal which allows the keystone correction on the projected image by moving each side of the projected image in parallel or rotating each side of the projected image.

A central axis may be displayed on each side of the projected image displayed on the projection screen.

The keystone correction is performed on the projected image in such a manner that each side of the projected image is moved according to the manipulation signal so that the projected image fits a desired screen area (S930).

Specifically, each side of the projected image may coincide with that of the screen in such a manner that each side is moved in parallel according to the manipulation signal so that the central axis of each side accords to the corresponding side of the screen.

Each side of the projected image may coincide with the screen by rotating each side clockwise or counterclockwise with respect to the central axis.

The method for performing the keystone correction on the projected image has been described above with reference to FIGS. 3A to 6C, and thus detailed description will be omitted.

A corrected original image is generated by moving each side of the original image to coincide with each side of the corrected projected image (S940).

A plurality of equations regarding each side of the corrected original image are set up (S950). In particular, a plurality of equations indicating each side may be set up using the movement or the rotation of each side.

Coordinates of each vertex of the corrected original image may be calculated using the equations which are set up in operation S950 (S960).

Specifically, coordinates of each vertex of the corrected original image may be calculated by solving the simultaneous equations of two sides which cross each other.

While a corrected original image is generated and a plurality of equations corresponding to each side of the image are set up in the exemplary embodiments, this is merely exemplary for convenience of description. The time when the plurality of equations are calculated may be set differently according to a designer. For example, if the correction on one of the plurality of sides is completed, that is, the parallel movement and the rotation are completed, the equation corresponding to the side may be set up.

Accordingly, a user may intuitively perform a keystone correction on a projected image. In this exemplary embodiment, the keystone correction is performed using lines, not points, and thus the projected image is corrected more accurately and quickly.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. An image distortion correction method, comprising:

   projecting an image on a projection screen (S910);
   receiving an adjustment signal which allows a keystone correction on the projected image (S920);
   correcting a keystone distortion of the projected image by moving each side of the projected image according to the adjustment signal to coincide with a screen (S930); and
   generating a corrected original image by moving each side of an original image to correspond to each side of the corrected projected image (S940).

2. The image distortion correction method as claimed in claim 1, further comprising:

   setting up a plurality of equations corresponding to positions of each side of the corrected original image (S950); and
   calculating coordinates of each vertex of the corrected original image using the plurality of equations (S960).

3. The image distortion correction method as claimed in any preceding claim, wherein:

   the projecting comprises displaying a central axis of each side of the projected image on the projection screen; and
   the correcting comprises matching the central axis of each side of the projected image with a corresponding side of the desired screen by moving each side of the projected image in parallel according to the adjustment signal so that each side of the projected image coincides with the desired screen.

4. The image distortion correction method as claimed in claim 3, wherein the correcting comprises rotating each side of the projected image which is moved in parallel according to the adjustment signal clockwise or counterclockwise with respect to the central axis.

5. The image distortion correction method as claimed in claim 4, wherein the adjustment signal is received from a remote controller which receives a user command to perform a parallel movement or a rotation of each side of the projected image, and the parallel movement or the rotation is performed according to at least one of a number of manipulations, a manipulated time period, and a manipulated distance on the remote controller.

6. The image distortion correction method as claimed in claim 4, wherein the adjustment signal is received from a remote controller which receives a user command to perform a parallel movement or a rotation of each side of the projected image, and the parallel movement or the rotation is performed according to a movement distance or a rotation angle of the remote controller or a touch on a touch panel provided on the remote controller.

7. The image distortion correction method as claimed in claim 4, further comprising:

   displaying a pointer which indicates a side selected according to the adjustment signal; and
   moving and displaying the point according to the parallel movement or the rotation of each side of the projected image.

8. An image distortion correction apparatus, comprising:

   an image projector (130) arranged to project an image on a projection screen;
   a user interface (140) arranged to receive an adjustment signal allowing a keystone correction on the projected image;
   a keystone correction unit (150) arranged to correct a keystone distortion of the projected image by moving each side of the projected image according to the adjustment signal to coincide with a desired screen, and arranged to generate a corrected original image by moving each side of an original image to correspond to each side of the corrected projected image; and
   a controller (160) arranged to provide the image projector with the corrected original image.

9. The image distortion correction apparatus as claimed in claim 8, wherein the keystone correction unit is arranged to set up a plurality of equations corresponding to positions of each side of the corrected original image, and to calculate coordinates of each vertex of the corrected original image using the plurality of equations.

10. The image distortion correction apparatus as claimed in any of claims 8 to 9, wherein:

the controller is arranged to control the image projector to display a central axis of each side of the projected image on the projection screen, and to control the keystone correction unit to match the central axis of each side of the projected image with a corresponding side of the desired screen by moving each side of the projected image in parallel according to the adjustment signal so that each side of the projected image accords to the desired screen.

11. The image distortion correction apparatus as claimed in claim 10, wherein the controller is arranged to control the keystone correction unit to rotate each side of the projected image which is moved in parallel according to the adjustment signal clockwise or counterclockwise with respect to the central axis.

12. The image distortion correction apparatus as claimed in claim 11 arranged to receive the adjustment signal from a remote controller which is arranged to receive a user command to perform a parallel movement or a rotation of each side of the projected image, and the parallel movement or the rotation is performed according to at least one of a number of manipulations, a manipulated time period, and a manipulated distance on the remote controller.

13. The image distortion correction apparatus as claimed in claim 11 arranged to receive the adjustment signal from a remote controller which is arranged to receive a user command to perform a parallel movement or a rotation of each side of the projected image, and the parallel movement or the rotation is performed according to a movement distance or a rotation angle of the remote controller or a touch on a touch panel provided on the remote controller.

14. The image distortion correction apparatus as claimed in claim 11 arranged to receive the adjustment signal from a remote controller which is arranged to receive a user command to perform a parallel movement or a rotation of each side of the projected image, and the parallel movement or the rotation is performed according to a touch on a touch panel provided on the remote controller.

15. The image distortion correction apparatus as claimed in claim 11, wherein the controller is arranged to control the image projector to display a pointer which is arranged to indicate a side selected according to the adjustment signal, and to move and display the point according to the parallel movement or the rotation of each side of the projected image.

# FIG. 1A

# FIG. 1B

20-1

20-2

# FIG. 2

200

160

| | | |
|---|---|---|
| 110 — IMAGE INPUT UNIT | ↔ | |
| | | 160 CONTROLLER | ↔ | IMAGE PROJECTOR — 130 |
| 120 — SIGNAL PROCESSOR | ↔ | | ↔ | USER INTERFACE — 140 |
| 150 — KEYSTONE CORRECTION UNIT | ↔ | |

# FIG. 3A

PROJECTED IMAGE

ORIGINAL IMAGE

S

O'

O

# FIG. 3B

PROJECTED IMAGE

ORIGINAL IMAGE

# FIG. 3C

PROJECTED IMAGE

ORIGINAL IMAGE

# FIG. 4A

PROJECTED IMAGE

ORIGINAL IMAGE

# FIG. 4B

PROJECTED IMAGE                    ORIGINAL IMAGE

# FIG. 4C

PROJECTED IMAGE

ORIGINAL IMAGE

θ2

θ2

# FIG. 5A

PROJECTED IMAGE

ORIGINAL IMAGE

S

O'

O

# FIG. 5B

PROJECTED IMAGE

ORIGINAL IMAGE

# FIG. 5C

PROJECTED IMAGE

ORIGINAL IMAGE

# FIG. 6A

PROJECTED IMAGE

ORIGINAL IMAGE

# FIG. 6B

PROJECTED IMAGE

ORIGINAL IMAGE

# FIG. 6C

PROJECTED IMAGE                    ORIGINAL IMAGE

θ4                                    θ4

# FIG. 7A

PROJECTED IMAGE                    ORIGINAL IMAGE

# FIG. 7B

(A,B)

① (x1,y1)

$y=a_1x+b_1$

C

② (x2,y2)

$y=a_4x+b_4$

$y=a_2x+b_2$

③ (x3,y3)

④ (x4,y4)

$y=a_3x+b_3$

(0,0)

# FIG. 8A

PROJECTED IMAGE

MOVE

ROTATE

# FIG. 8B

PROJECTED IMAGE

# FIG. 8C

PROJECTED IMAGE

# FIG. 9

START

S910 —— PROJECT IMAGE ON PROJECTION SCREEN

S920 —— INPUT ADJUSTMENT SIGNAL ALLOWING KEYSTONE CORRECTION ON PROJECTED IMAGE

S930 —— PERFORM KEYSTONE CORRECTION ON PROJECTED IMAGE IN SUCH A MANNER THAT EACH SIDE OF PROJECTED IMAGE IS MOVED ACCORDING TO MANIPULATION SIGNAL SO THAT PROJECTED IMAGE FITS DESIRED SCREEN AREA

S940 —— GENERATE CORRECTED ORIGINAL IMAGE BY MOVING EACH SIDE OF ORIGINAL IMAGE TO COINCIDE WITH EACH SIDE OF CORRECTED PROJECTED IMAGE

S950 —— SET UP EQUATIONS REGARDING EACH SIDE OF CORRECTED ORIGINAL IMAGE

S960 —— CALCULATING COORDINATES OF EACH VERTEX OF CORRECTED ORIGINAL IMAGE USING EQUATIONS

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100030039